(19) **Europäisches Patentamt**

**European Patent Office**

**Office européen des brevets**

(11) **EP 1 007 475 B1**

(12) **FASCICULE DE BREVET EUROPEEN**

| | |
|---|---|
| (45) Date de publication et mention de la délivrance du brevet:<br>**21.08.2002 Bulletin 2002/34** | (51) Int Cl.$^7$: **C01G 43/01**, C01G 43/025 |
| (21) Numéro de dépôt: **99920881.2** | (86) Numéro de dépôt international:<br>**PCT/FR99/01178** |
| (22) Date de dépôt: **18.05.1999** | (87) Numéro de publication internationale:<br>**WO 99/059920 (25.11.1999 Gazette 1999/47)** |

(54) **SYSTEME DE FILTRATION POUR REACTEUR DE CONVERSION D'UF 6? EN OXYDE D'URANIUM**

FILTERSYSTEM FÜR REAKTOR ZUR UMSETZUNG VON UF6 IN URANOXID

FILTERING SYSTEM FOR REACTOR CONVERTING UF 6? INTO URANIUM OXIDE

| | |
|---|---|
| (84) Etats contractants désignés:<br>**DE FR GB NL** | (72) Inventeur: **DELESTRE, André**<br>**F-07700 Bourg Saint Andeol (FR)** |
| (30) Priorité: **19.05.1998 FR 9806303** | (74) Mandataire: **Signore, Robert et al**<br>**c/o BREVATOME**<br>**3, rue du Docteur Lanceraux**<br>**75008 Paris (FR)** |
| (43) Date de publication de la demande:<br>**14.06.2000 Bulletin 2000/24** | |
| (73) Titulaire: **COMPAGNIE GENERALE DES MATIERES NUCLEAIRES**<br>**78140 Velizy Villacoublay (FR)** | (56) Documents cités:<br>**EP-A- 0 230 087**     **WO-A-95/33689**<br>**US-A- 4 053 559** |

## Description

### Domaine technique

La présente invention concerne la filtration de gaz de réaction provenant d'un réacteur à lit fluidisé pour la conversion de l'hexafluorure d'uranium $UF_6$ en oxyde d'uranium, en particulier en oxyde $UO_2$.

### Etat de la technique antérieure

L'uranium enrichi provenant des usines de séparation isotopique se présente en général sous forme d'hexafluorure $UF_6$. Cet hexafluorure doit être généralement transformé en poudre d'oxyde $UO_2$ qui, pour être frittable, doit présenter un certain nombre de propriétés physiques. Il existe divers procédés permettant d'obtenir du bioxyde d'uranium $UO_2$ de qualité convenant au frittage à partir de l'hexafluorure.

Un procédé de conversion intéressant consiste à passer par le composé intermédiaire $UO_2F_2$. L'hexafluorure est transformé en oxyfluorure à l'issue de la réaction suivante :

$$UF_6 + 2H_2O \rightarrow UO_2F_2 + 4HF$$

l'eau étant fournie sous forme de vapeur. On peut obtenir de l'oxyfluorure extrêmement réactif en diluant très fortement la vapeur d'eau avec de l'air ou de l'azote.

On obtient de l'oxyde $UO_2$ à l'issue de la deuxième phase du procédé, par la réaction suivante :

$$UO_2F_2 + H_2 \rightarrow UO_2 + 2HF$$

Pour obtenir de l'oxyde $UO_2$ frittable, on peut réaliser une hydrolyse réductrice de $UO_2F_2$ par de la vapeur d'eau en présence d'hydrogène qui peut être fourni par de l'ammoniac craqué.

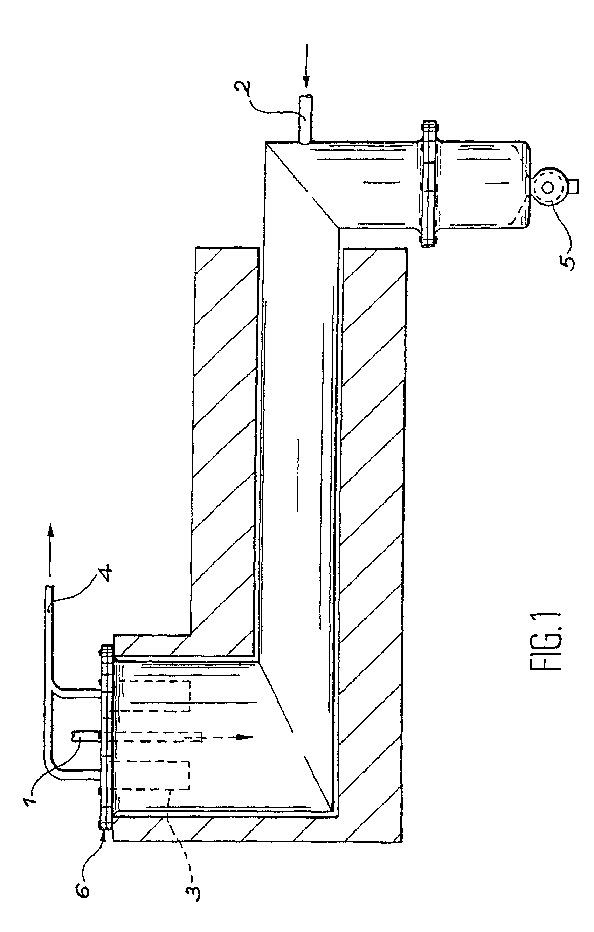

Le document FR-A-2 060 242 divulgue un procédé de fabrication d'oxyde d'uranium frittable à partir d'hexafluorure d'uranium selon lequel on fait réagir de l'hexafluorure d'uranium gazeux avec de la vapeur d'eau à une température supérieure à 100°C, on soustrait immédiatement l'oxyfluorure provenant de la réaction à l'action de l'hexafluorure et on transforme l'oxyfluorure en oxyde d'uranium. Ce procédé peut être mis en oeuvre dans le dispositif représenté à la figure 1 ci-jointe.

Le dispositif schématisé à la figure 1 est constitué par un four dont l'enceinte présente une forme en S. Les produits de la réaction parcourent successivement dans le four plusieurs zones portées à des températures différentes et ajustables par des moyens de chauffage non représentés. L'$UF_6$, ainsi éventuellement que la vapeur d'eau et l'azote, suivant qu'on opère à co-courant ou à contre courant, sont introduits à travers une chambre de filtration des gaz à la partie supérieure gauche du four par un conduit muni d'un injecteur 1. Un conduit 2 sert à l'introduction des gaz de pyrolyse et de réduction d'$UO_2F_2$ (vapeur d'eau pure ou diluée). Les gaz provenant de la réaction ($HF$, $H_2O$ en excès et éventuellement $H_2$) sortent de l'enceinte du four à travers des filtres 3 en métal fritté, à décolmatage automatique, qui évitent l'entraînement de $UO_2F_2$ dans la conduite 4 et retiennent les particules entraînées par les gaz de pyrolyse. Les filtres 3 sont supportés par un élément de fermeture 6 de la partie supérieure du four, cet élément étant traversé par le conduit 1. L'hexafluorure $UF_6$ étant transformé en $UO_2F_2$ dès la partie gauche du four, maintenue à une température de l'ordre de 180°C, $UO_2F_2$ est très rapidement soustrait à l'action de $UF_6$. La poudre d'$UO_2F_2$ est ensuite transformée en oxyde dans la partie représentée à l'horizontale sur la figure 1, où elle est entraînée par des moyens classiques, qui peuvent s'ajouter à la gravité si une pente suffisante est prévue. L'oxyde d'uranium en poudre est enfin extrait par une vanne rotative ou une vis sans fin 5. Grâce à la disposition ci-dessus, le temps de séjour d'$UO_2F_2$ dans la zone d'hydrolyse est très court, voisin de la seconde en général.

Les filtres peuvent être constitués de bougies filtrantes réparties en plusieurs secteurs. Il peut par exemple y avoir huit secteurs comportant chacun dix-sept bougies, ce qui permet d'avoir six secteurs en cours de fonctionnement, un secteur dont les bougies sont en cours de décolmatage et un secteur en attente de décolmatage.

Les filtres 3, comme il a été dit plus haut, retiennent $UO_2F_2$ qui se présente sous forme de poudre et évitent son entraînement dans la conduite 4. Les bougies constituant les filtres sont soumises à des contraintes thermiques relativement importantes. Etant donné leur nombre (136 dans l'exemple donné ci-dessus), il existe le risque que l'une d'entre elles casse ou se détériore et que de l'oxyfluorure passe dans la conduite 4. Il est important de pouvoir détecter rapidement une fuite d'$UO_2F_2$.

Pour détecter un produit non désiré dans un flux gazeux, il est classique d'analyser ce flux gazeux pour tenter de repérer le constituant non désiré. Cependant, $UO_2F_2$ se trouve sous forme d'une poudre très fine et se présente donc sous forme d'un aérosol dans le flux gazeux. Les particules d'aérosol sont généralement chargées électriquement et on peut les recueillir par une méthode de filtration électrostatique. Cependant, il se trouve que $UO_2F_2$ constitue un aérosol non chargé. D'autres méthodes de récupération de ce produit dans un flux gazeux peuvent être envisagées, par exemple par filtration mécanique, mais elles ne se sont pas avérées satisfaisantes.

Le document US-A-4 053 559 divulgue un procédé de fabrication de poudre de dioxyde d'uranium à partir d'$UF_6$ dans une série de quatre réacteurs à lit fluidisé. Le quatrième réacteur comprend notamment des filtres internes pour les gaz de réaction, ces filtres internes étant à décolmatage automatique. Il est également prévu, en aval de ces filtres internes, d'autres moyens de filtration.

**Exposé de l'invention**

Pour remédier aux problèmes de l'art antérieur, il est proposé un système de filtration comprenant un premier étage de filtration décolmatable et un deuxième étage de filtration non décolmatable permettant de détecter, par mesure de pression, les défauts sur le premier étage et jouant ainsi le rôle de filtre de garde.

L'invention a donc pour objet un système de filtration de gaz de réaction provenant d'un réacteur à lit fluidisé pour la conversion d'hexafluorure d'uranium $UF_6$ en oxyde d'uranium, comprenant des premiers moyens de filtration, à décolmatage automatique, laissant passer lesdits gaz de réaction et retenant le composé intermédiaire pulvérulent $UO_2F_2$ qui se forme lors de la conversion, des seconds moyens de filtration étant prévus en aval des premiers moyens de filtration pour laisser passer lesdits gaz de réaction et pour retenir le composé $UO_2F_2$ en cas d'une fuite due à un défaut de fonctionnement des premiers moyens de filtration, caractérisé en ce que les seconds moyens de filtration sont non décolmatables automatiquement, lesdits premiers moyens de filtration étant répartis en plusieurs secteurs, les seconds moyens de filtration étant également répartis en plusieurs secteurs, à chaque secteur des premiers moyens de filtration correspondant un secteur des seconds moyens de filtration, le système comportant en outre des moyens de contrôle de la présence du composé $UO_2F_2$ retenu dans les seconds moyens de filtration, ces moyens de contrôle comprenant des moyens de mesure de pression. Les moyens de contrôle peuvent ainsi comparer la pression à l'intérieur du réacteur et la pression des gaz de réaction entre les premiers et les seconds moyens de filtration.

Les premiers et les seconds moyens de filtration peuvent être constitués de bougies filtrantes.

L'invention procure en outre l'avantage d'une disposition géométrique favorable pour la filtration primaire, ce qui permet d'obtenir un refroidissement préliminaire des gaz à filtrer donc une réduction substantielle du volume gazeux à filtrer et par voie de conséquence une réduction de la surface de filtration.

**Brève description des dessins**

L'invention sera mieux comprise et d'autres avantages et particularités apparaîtront à la lecture de la description qui va suivre, donnée à titre d'exemple non limitatif, accompagnée des figures annexées parmi lesquelles :

- la figure 1, déjà décrite, montre très schématiquement un dispositif selon l'art connu, destiné à mettre en oeuvre un procédé de fabrication d'oxyde d'uranium à partir d'$UF_6$,
- la figure 2 illustre un système de filtration selon l'invention pour réacteur de conversion d'$UF_6$ en oxyde d'uranium.

**Description détaillée d'un mode de réalisation de l'invention**

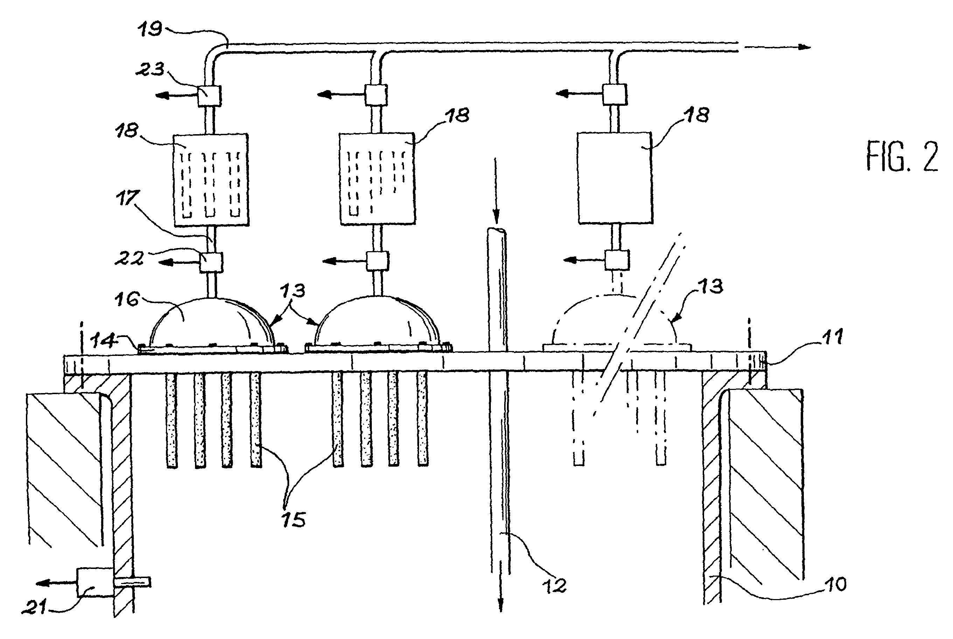

Par souci de simplification et de clarté, on n'a représenté sur la figure 2 que la partie supérieure du four, correspondant à la partie gauche de la figure 1, c'est-à-dire celle qui comporte le système de filtration selon l'invention.

On distingue la partie supérieure du four 10 fermée par l'élément de fermeture 11 qui est traversé par le conduit 12 d'introduction de l'hexafluorure d'uranium et éventuellement d'autres produits. L'élément de fermeture 11 est percé de huit trous pour la mise en place d'un premier étage de filtration comportant huit secteurs 13.

Chaque secteur 13 est constitué d'une plaque 14 fixée de manière étanche sur l'élément de fermeture 11 et supportant dix-sept bougies filtrantes 15, à décolmatage automatique dont les têtes sont également fixées de manière étanche sur la plaque 14. La plaque 14 est surmontée d'une cloche 16 servant de collecteur des gaz filtrés. Chaque cloche 16 est reliée à un conduit 17 de récupération des gaz filtrés qui véhicule ceux-ci jusqu'à un deuxième étage de filtration.

Le deuxième étage de filtration comporte autant de secteurs que le premier étage de filtration. Chaque secteur 18 du deuxième étage comporte trois bougies. Ces bougies ne sont pas décolmatables ou du moins il n'est pas prévu de système permettant de les décolmater.

La sortie de chaque secteur 18 du deuxième étage de filtration est reliée à un conduit 19 qui rejoint la conduite d'évacuation générale.

En fonctionnement, les bougies filtrantes 15 du premier étage de filtration laissent passer les gaz de réaction à récupérer et retiennent $UO_2F_2$ qui se dépose sur la surface des bougies en contact avec l'atmosphère du four. Les gaz filtrés passent ensuite le deuxième étage de filtration pour être récupérés et traités.

Périodiquement, les bougies filtrantes du premier étage de filtration sont décolmatées. Leur nettoyage est par exemple réalisé par injection pulsative d'un gaz neutre sous pression à l'intérieur des bougies.

Si l'une des bougies 15 du premier étage de filtration laisse passer de l'oxyfluorure par suite d'un défaut, par exemple à cause d'une cassure de la bougie, de l'oxyfluorure passe dans le secteur 18 de deuxième étage de filtration correspondant. Les trois bougies de ce secteur finissent par se colmater mais l'oxyfluorure ne passe pas.

Un tel défaut de fonctionnement peut être détecté par des mesures de pression. Des détecteurs de pression peuvent être sans problème disposés sur le réacteur et son système de filtration. Un détecteur de pression 21 est par exemple installé sur la partie supérieure du four 10. La sortie de chaque secteur 13 du premier étage de filtration peut être équipée d'un détecteur de pression 22. La sortie de chaque secteur 18 du deuxième étage de filtration peut être équipée d'un détecteur de pression 23.

A titre d'exemple, en fonctionnement normal, la pression dans le réacteur peut être de 1050 mbar absolus, la pression intermédiaire entre les deux étages de filtration peut être de 900 mbar absolus et la pression de sortie des gaz (dans le conduit 19) peut être de 700 à 800 mbar absolus.

Un défaut de fonctionnement peut alors être décelé si la pression intermédiaire entre un secteur du premier étage de filtration et le secteur correspondant du deuxième étage de filtration devient égale à la pression du réacteur.

## Revendications

**1.** Système de filtration de gaz de réaction provenant d'un réacteur à lit fluidisé (10) pour la conversion d'hexafluorure d'uranium $UF_6$ en oxyde d'uranium, comprenant des premiers moyens de filtration (13), à décolmatage automatique, laissant passer lesdits gaz de réaction et retenant le composé intermédiaire pulvérulent $UO_2F_2$ qui se forme lors de la conversion, des seconds moyens de filtration (18) étant prévus en aval des premiers moyens de filtration (13) pour laisser passer lesdits gaz de réaction et pour retenir le composé $UO_2F_2$ en cas d'une fuite due à un défaut de fonctionnement des premiers moyens de filtration (13), **caractérisé en ce que** les seconds moyens de filtration (18) sont non décolmatables automatiquement, lesdits premiers moyens de filtration étant répartis en plusieurs secteurs (13), les seconds moyens de filtration étant également répartis en plusieurs secteurs (18), à chaque secteur (13) des premiers moyens de filtration correspondant un secteur (18) des seconds moyens de filtration, le système comportant en outre des moyens de contrôle de la présence du composé $UO_2F_2$ retenu dans les seconds moyens de filtration (18), lesdits moyens de contrôle comprenant des moyens de mesure de pression (21, 22).

**2.** Système de filtration selon la revendication 1, **caractérisé en ce que** lesdits moyens de contrôle comparent la pression à l'intérieur du réacteur et la pression des gaz de réaction entre les premiers (13) et les seconds (18) moyens de filtration.

**3.** Système de filtration selon l'une des revendications 1 ou 2, **caractérisé en ce que** les premiers moyens de filtration sont constitués de bougies filtrantes (15).

**4.** Système de filtration selon l'une quelconque des revendications 1 à 3, **caractérisé en ce que** les seconds moyens de filtration sont constitués de bougies filtrantes.

## Claims

**1.** System of filtration of reaction gases coming from a fluidized bed reactor (10) for the conversion of uranium hexafluoride $UF_6$ into uranium oxide, comprising first means of filtration (13), with automatic back-blowing, that allow said reaction gases to pass and that retain the intermediate powder compound $UO_2F_2$, which is formed during the conversion, second means of filtration (18) being provided downstream from the first filtration means (13), to allow said reaction gases to pass and to retain the compound $UO_2F_2$ in case of a leak due to an operational defect in the first filtration means (13), **characterized in that** the second filtration means (18) cannot be automatically back-blown, said first filtration means being subdivided into several sectors (13), whilst the second filtration means are also subdivided into several sectors (18) and with each sector (13) of the first filtration means corresponds a sector (18) of the second filtration means, the system also having means for checking the presence of the compound $UO_2F_2$ retained in the second filtration means (18), said checking means incorporating pressure measuring means (21, 22).

**2.** Filtration system according to claim 1, **characterized in that** said checking means compare the pressure inside the reactor and the pressure of the reaction gases between the first (13) and the second (18) means of filtration.

**3.** Filtration system according to one of the claims 1 or 2, **characterized in that** the first filtration means are constituted by filtering candles (15).

**4.** Filtration system according to any one of the claims 1 to 3, **characterized in that** the second filtration means are constituted by filtering candles.

## Patentansprüche

**1.** System zum Filtern von Reaktionsgas, das aus einem Wirbelschichtreaktor (10) zur Umwandlung von Uranhexafluorid $UF_6$ in Uranoxid herrührt, umfassend erste Filtermittel (13) mit automatischer Durchspülung, welche die Reaktionsgase passieren lassen und die pulverige Zwischenverbindung

$UO_2F_2$, die sich während der Umwandlung bildet, zurückhalten, zweite Filtermittel (18), welche stromab der ersten Filtermittel (13) vorgesehen sind, um die Reaktionsgase passieren zu lassen und die Verbindung $UO_2F_2$ im Fall eines Lecks infolge eines Funktionsfehlers der ersten Filtermittel (13) zurückzuhalten, **dadurch gekennzeichnet, daß** die zweiten Filtermittel (18) nicht automatisch durchspülbar sind, wobei die ersten Filtermittel auf mehrere Sektoren (13) aufgeteilt sind, die zweiten Filtermittel ebenfalls auf mehrere Sektoren (18) aufgeteilt sind, wobei jedem Sektor (13) der ersten Filtermittel ein Sektor (18) der zweiten Filtermittel entspricht, und das System außerdem Mittel zur Überwachung des Vorhandenseins der in den zweiten Filtermitteln (18) zurückgehaltenen Verbindung $UO_2F_2$ aufweist, und die Überwachungsmittel Mittel zum Messen des Drucks (21,22) umfassen.

2. Filtersystem nach Anspruch 1, **dadurch gekennzeichnet, daß** die Überwachungsmittel den Druck im Innern des Reaktors und den Druck der Reaktionsgase zwischen den ersten (13) und den zweiten Filtermitteln vergleichen.

3. Filtersystem nach einem der Ansprüche 1 oder 2, **dadurch gekennzeichnet, daß** die ersten Filtermittel aus Filtrierkerzen (15) bestehen.

4. Filtersystem nach einem der Ansprüche 1 bis 3, **dadurch gekennzeichnet, daß** die zweiten Filtermittel aus Filtrierkerzen bestehen.

FIG.1

FIG. 2